# EUROPÄISCHE PATENTANMELDUNG

(11) **EP 4 382 233 A1**
(43) Veröffentlichungstag der Anmeldung: **12.06.2024**
(21) Anmeldenummer: 22212131.1
(22) Anmeldetag: 08.12.2022
(51) Int. Cl.: B23D 57/00, B23D 59/00, B23D 59/04, B28D 5/00, B28D 5/04

(54) **VERFAHREN ZUM ABTRENNEN EINER VIELZAHL VON SCHEIBEN VON EINEM WERKSTÜCK MITTELS EINER DRAHTSÄGE WÄHREND EINES ABTRENNVORGANGS**

(71) Anmelder: Siltronic AG, 81677 München (DE)
(72) Erfinder: Gotzler, Julian, 84489 Burghausen (DE); Gräf, Daniel, 84561 Mehring (DE)
(74) Vertreter: Staudacher, Wolfgang

(57) **Zusammenfassung**

Verfahren zum Abtrennen einer Vielzahl von Scheiben von einem Werkstück mittels einer Drahtsäge während eines Abtrennvorgangs, wobei die Drahtsäge ein Drahtgatter aus sich bewegenden Drahtabschnitten eines Sägedrahts und eine Stellvorrichtung umfasst, und das Drahtgatter in einer Ebene zwischen zwei Drahtführungsrollen gespannt ist, wobei jede der zwei Drahtführungsrollen zwischen einem Festlager und einem Loslager gelagert ist, das Verfahren umfasst das Zustellen des Werkstücks mittels der Stellvorrichtung durch das Drahtgatter entlang einer Zustellrichtung senkrecht zu einer Werkstückachse und senkrecht zur Ebene des Drahtgatters;
das Zuführen eines Schneidmittels zum Drahtgatter;
das Zuführen eines Temperier-Mediums zum Werkstück;
das Leiten einer Temperier-Flüssigkeit entsprechend eines Temperaturprofils durch die Festlager und/oder das Verschieben des Werkstücks entlang der Werkstückachse entsprechend eines Verschiebeprofils, wobei das Temperaturprofil und das Verschiebeprofil einer Formabweichung entgegengerichtet sind;
gekennzeichnet durch
das Ermitteln von Warp-Kurven von mindestens einer Scheibe vom Werkstück-Anfang und von mindestens einer Scheibe vom Werkstück-Ende von mindestens einem vorausgegangenen Abtrennvorgang unter Verwendung der Drahtsäge;
das Bilden der Differenz der Warp-Kurven;
das Einstellen der Temperatur und/oder der Volumen-Geschwindigkeit des Schneidmittels während des Abtrennvorgangs in Abhängigkeit der Differenz der Warp-Kurven; und
das Einstellen der Temperatur und/oder der Volumen-Geschwindigkeit des Temperier-Mediums in Abhängigkeit der Differenz der Warp-Kurven.

## Beschreibung

Gegenstand der Erfindung ist ein Verfahren zum Abtrennen einer Vielzahl von Scheiben von einem Werkstück mittels einer Drahtsäge während eines Abtrennvorgangs.

### Stand der Technik / Probleme

Verfahren dieser Gattung werden beispielsweise im Zuge der Herstellung von Halbleiterscheiben, insbesondere von Scheiben aus einkristallinem Silizium, eingesetzt und als MWS-Verfahren (multi-wire-slicing) bezeichnet. Eine Ausgestaltung eines solchen Verfahrens sieht vor, das Werkstück, beispielsweise einen zylindrischen Stab aus einkristallinem Silizium, durch parallel zueinander zu einem Drahtgatter angeordnete Drahtabschnitte eines in Längsrichtung bewegten Sägedrahts in Gegenwart einer Suspension aus Schneidflüssigkeit und Hartstoffen auch Slurry genannt, zuzustellen und dabei in Scheiben zu zerteilen.

Im Zuge des Verfahrens wird an verschiedenen Orten der Drahtsäge und am Werkstück Wärme erzeugt, so dass sich das Werkstück und das Drahtgatter aufgrund von Wärmeausdehnung relativ zueinander bewegen. Eine solche Relativbewegung führt zu einer Unebenheit der Hauptflächen der abgetrennten Scheiben. Es gibt Bemühungen, diesen nachteiligen Effekt abzumildern.

US 2012 0 178 346 A1 beschreibt das Zuführen einer Kühlflüssigkeit zum Werkstück und das Abstreifen der Kühlflüssigkeit vom Werkstück. Es wird gezeigt, dass durch diese Maßnahme unter anderem der lokale Warp von abgetrennten Scheiben kleiner wird.

In US 2007 0 178 807 A1 wird vorgeschlagen, die Temperatur und/oder die Volumen-Geschwindigkeit einer zum Werkstück-Halter zugeführten Slurry und die Temperatur und/oder die Volumen-Geschwindigkeit der zum Drahtgatter zugeführten Slurry abhängig von der Schnitttiefe einzustellen.

Das in EP 3 922 386 A1 beschriebene Verfahren umfasst das Zuführen einer Slurry zum Drahtgatter, das Benetzen des Werkstücks mit einem Kühlmedium und das Temperieren der Festlager der Drahtführungsrollen mit einer Kühlflüssigkeit. Die Temperatur des Kühlmediums und die Temperatur der Kühlflüssigkeit folgen gemäß der Vorgabe eines jeweiligen Temperaturprofils, das die Temperatur des Kühlmediums beziehungsweise der Kühlflüssigkeit in Abhängigkeit der Schnitttiefe vorgibt und einer Formabweichung von einer ebenen Zielform entgegengerichtet ist, die an zuvor abgetrennten Scheiben ermittelt wird. Als Alternative oder ergänzend zum Temperieren der Festlager wird das Verschieben des Werkstücks entlang der Werkstückachse mittels eines Stellelements angeregt, wobei der Verlauf des Verschiebewegs der Formabweichung entgegengerichtet ist. Die Formabweichung derartig hergestellter Scheiben, dargestellt in Form einer gemittelten Warp-Kurve, ist vergleichsweise gering. Dieses Verfahren, dessen Alternative und die Kombination von beiden wird nachfolgend als Verfahren zur Korrektur des mittleren Warps bezeichnet.

Während eines Abtrennvorgangs erwärmt sich das Werkstück und dehnt sich dabei vorübergehend aus. Die Abstandsänderung von einem Drahtabschnitt zur am nächsten gelegenen Werkstückstirnseite ist umso größer, je kürzer der Abstand des Drahtabschnitts zu dieser Werkstückstirnseite zu Beginn des Abtrennvorgans ist. Definiert man als Werkstück-Anfang die Stirnseite des Werkstücks, die den geringsten Abstand zum Drahtgatter hat, wo der Sägedraht ins Drahtgatter läuft, und als Werkstück-Ende die Stirnseite des Werkstücks, die den geringsten Abstand zum Drahtgatter hat, wo der Sägedraht aus dem Drahtgatter läuft, stellt man fest, dass Scheiben mit dem kürzesten Abstand zum Werkstück-Anfang und zum Werkstück-Ende wegen der Wärmeausdehnung des Werkstücks den größten Warp aufweisen. Darüber hinaus ist die Form solcher Scheiben gegenläufig. Die Form einer Scheibe, die nahe vom Werkstück-Anfang abgetrennt wird, ist konkav, die einer Scheibe, die nahe vom Werkstück-Ende abgetrennt wird, konvex.

Verringert man die Formabweichung mittels Temperierens der Festlager und/oder mittels Verschiebens des Werkstücks und überlagert man Diagramme, auf denen Warp-Kurven endständig abgetrennter Scheiben aufgetragen sind, erhält man ein Bündel von Kurven, die an die Kontur eines umhüllten Bonbons erinnern. Wegen der erwähnten Gegenläufigkeit ist die Variation der Warp-Kurven beim Einschnitt, in der Schnittmitte und beim Ausschnitt am größten.

Aufgabe der vorliegenden Erfindung ist es, diese Variation abzumildern.

Die Aufgabe der Erfindung wird gelöst durch ein Verfahren zum Abtrennen einer Vielzahl von Scheiben von einem Werkstück mittels einer Drahtsäge während eines Abtrennvorgangs, wobei die Drahtsäge ein Drahtgatter aus sich bewegenden Drahtabschnitten eines Sägedrahts und eine Stellvorrichtung umfasst, und das Drahtgatter in einer Ebene zwischen zwei Drahtführungsrollen gespannt ist, wobei jede der zwei Drahtführungsrollen zwischen einem Festlager und einem Loslager gelagert ist, das Verfahren umfasst
das Zustellen des Werkstücks mittels der Stellvorrichtung durch das Drahtgatter entlang einer Zustellrichtung senkrecht zu einer Werkstückachse und senkrecht zur Ebene des Drahtgatters;
das Zuführen eines Schneidmittels zum Drahtgatter;
das Zuführen eines Temperier-Mediums zum Werkstück;
das Leiten einer Temperier-Flüssigkeit entsprechend eines Temperaturprofils durch die Festlager und/oder das Verschieben des Werkstücks entlang der Werkstückachse entsprechend eines Verschiebeprofils, wobei das Temperaturprofil und das Verschiebeprofil einer Formabweichung entgegengerichtet sind;
gekennzeichnet durch
das Ermitteln von Warp-Kurven von mindestens einer Scheibe vom Werkstück-Anfang und von mindestens einer Scheibe vom Werkstück-Ende von mindestens einem vorausgegangenen Abtrennvorgang unter Verwendung der Drahtsäge;
das Bilden der Differenz der Warp-Kurven;
das Einstellen der Temperatur und/oder der Volumen-Geschwindigkeit des Schneidmittels während des Abtrennvorgangs in Abhängigkeit der Differenz der Warp-Kurven; und
das Einstellen der Temperatur und/oder der Volumen-Geschwindigkeit des Temperier-Mediums in Abhängigkeit der Differenz der Warp-Kurven.

Das Verfahren greift zum Temperieren des Werkstücks während des Abtrennvorgangs auf Daten zurück, die drahtsägespezifisch sind, weil sie von Scheiben geliefert werden, die unter Verwendung derselben Drahtsäge erzeugt wurden. Die Drahtsäge umfasst zwei oder mehrere Drahtführungsrollen. Ermittelt wird jeweils eine Warp-Kurve in Schnittrichtung entlang des Durchmessers der Scheiben eines oder mehrerer Abtrennvorgänge, die dem Abtrennvorgang unter Verwendung der Drahtsäge vorausgegangen sind. Es werden mindestens zwei Scheiben ausgewählt, die vom Werkstück-Anfang und vom Werkstück-Ende stammen. Warp-Kurven von einer oder mehreren Scheiben vom Werkstück-Anfang und von einer oder mehreren Scheiben vom Werkstück-Ende werden jeweils zu einer gemeinsamen Warp-Kurve, die eine Scheibe vom Werkstück-Anfang beziehungsweise eine Scheibe vom Werkstück-Ende repräsentiert, gemittelt. Anschließend wird die Differenz der Warp-Kurven von einer oder mehreren Scheiben vom Werkstück-Ende und vom Werkstück-Anfang mindestens eines vorausgegangenen Abtrennvorgangs gebildet. Beruht die Differenz der Warp-Kurven auf Warp-Kurven, die von Scheiben vom Werkstück-Anfang und vom Werkstück-Ende mehrerer vorausgegangener Abtrennvorgänge stammen, werden Warp-Kurven von Scheiben vom Werkstück-Anfang beziehungsweise von Scheiben vom Werkstück-Ende vor der Differenzbildung jeweils zu einer Warp-Kurve gemittelt. An der Differenz der Warp-Kurven orientiert sich die Einstellung der Temperatur und/oder die Einstellung der Volumen-Geschwindigkeit des Schneidmittels und des Temperier-Mediums während des Abtrennvorgangs. Mit anderen Worten ausgedrückt, die Temperatur und/oder die Volumen-Geschwindigkeit des Schneidmittels beziehungsweise des Temperier-Mediums werden in Abhängigkeit der Differenz der Warp-Kurven vorgegeben, wobei die Temperier-Leistung zwischen dem Schneidmittel und dem Temperier-Medium unterschiedlich aufgeteilt sein kann. Vorzugsweise besteht am Anfang des Abtrennvorgangs ein Übergewicht an Temperier-Leistung auf der Seite des Temperier-Mediums und am Ende des Abtrennvorgangs ein Übergewicht an Temperier-Leistung auf der Seite des Schneidmittels, weil die mit dem Temperier-Medium benetzbare Mantelfläche des Werkstücks mit zunehmender Schnitttiefe abnimmt.

Ist die Differenz der Warp-Kurven bei einer bestimmten Schnitttiefe positiv, wird dem Werkstück relativ zur Wärmezufuhr bei einer Differenz von null mehr Wärme zugeführt. Ist die Differenz der Warp-Kurven bei einer bestimmten Schnitttiefe negativ, wird dem Werkstück relativ zur Wärmezufuhr bei einer Differenz von null mehr Wärme entzogen. Auf eine negative Differenz der Warp-Kurven kann mit abnehmender Temperatur des Schneidmittels, mit zunehmender Volumen-Geschwindigkeit des Schneidmittels, mit abnehmender Temperatur des Temperier-Mediums oder mit zunehmender Volumen-Geschwindigkeit des Temperier-Mediums reagiert werden. Dementsprechend kann auf eine positive Differenz der Warp-Kurven mit zunehmender Temperatur des Schneidmittels, mit abnehmender Volumen-Geschwindigkeit des Schneidmittels, mit zunehmender Temperatur des Temperier-Mediums oder mit abnehmender Volumen-Geschwindigkeit des Temperier-Mediums reagiert werden. Es kann eine Kombination von einer oder mehreren dieser Reaktions-Möglichkeiten gewählt werden. Insbesondere ist bevorzugt, nach Erreichen einer Schnitttiefe von nicht weniger als 85 % auf eine Reaktion mittels des Temperier-Mediums zu verzichten und die Zufuhr des Temperier-Mediums einzustellen.

Natürlich kann die Differenz der Warp-Kurven auch von einer oder mehreren Scheiben vom Werkstück-Anfang und von einer oder mehreren Scheiben vom Werkstück-Ende gebildet werden. Die Differenz hat dann ein umgekehrtes Vorzeichen und dementsprechend wird die Reaktion darauf umgekehrt. Bei einer positiven Differenz beispielsweise wird dem Werkstück relativ zur Wärmezufuhr bei einer Differenz von null dann weniger Wärme zugeführt. Dementsprechend wird auf eine positive Differenz der Warp-Kurven mit einer oder mehreren dieser Maßnahmen reagiert: einer abnehmenden Temperatur des Schneidmittels, mit einer zunehmenden Volumen-Geschwindigkeit des Schneidmittels, mit einer abnehmenden Temperatur des Temperier-Mediums und mit einer zunehmenden Volumen-Geschwindigkeit des Temperier-Mediums.

Aufgrund der vorgeschlagenen Art der Zufuhr von Schneidmittel und Temperier-Medium variiert die Form der Scheiben des Abtrennvorgangs, ausgedrückt als Warp-Kurve, deutlich weniger, als ohne diese Maßnahme.

Beim Schneidmittel handelt es sich um eine Slurry, also um eine Aufschlämmung von Hartstoff-Partikeln in einer Flüssigkeit. Das Temperier-Medium kann diese Slurry sein, eine anders zusammengesetzte Slurry oder eine Flüssigkeit ohne darin enthaltene Hartstoff-Partikel.

Das Durchleiten der Temperier-Flüssigkeit durch die Festlager und/oder das Verschieben des Werkstücks entlang der Werkstückachse beeinflusst das Aussehen der Scheiben des Abtrennvorgangs, ausgedrückt als gemittelte Warp-Kurve nach Mittelung der Warp-Kurven der Scheiben. Die Temperatur der Temperier-Flüssigkeit in Abhängigkeit von der Schnitttiefe folgt einem Temperaturprofil, das einer Formabweichung entgegengerichtet ist, und bewirkt mittels Wärmeausdehnung oder Wärmekontraktion des Festlagers ein axiales Verschieben der Loslager. Dementsprechend folgt das Verschieben des Werkstücks in Abhängigkeit von der Schnitttiefe einem Verschiebeprofil, das die Richtung und den Betrag des Verschiebens vorgibt und der Formabweichung entgegengerichtet ist. Vorzugsweise ist das Temperaturprofil beziehungsweise das Verschiebeprofil einer Formabweichung entgegengerichtet, die eine gemittelte Warp-Kurve von Scheiben anzeigt, die während des mindestens einen vorausgegangenen Abtrennvorgangs abgetrennt wurden oder einer Formabweichung, wie sie in EP 3 922 386 A1 definiert ist. Das Durchleiten der Temperier-Flüssigkeit durch die Festlager nach Vorgabe des Temperaturprofils und das Verschieben des Werkstücks entlang der Werkstückachse nach Vorgabe des Verschiebeprofils können gleichzeitig durchgeführt werden. Es kann aber auch auf das Eine oder das Andere verzichtet werden.

Es ist darüber hinaus bevorzugt dafür zu sorgen, dass sich das Schneidmittel und das Temperier-Medium möglichst wenig wechselseitig beeinflussen, indem das Temperier-Medium vom Werkstück abgestriffen und abgeleitet wird, bevor es auf das Drahtgatter fallen kann. Das kann beispielsweise so erfolgen, wie es in US 2012 0 178 346 A1 beschrieben ist.

Der Begriff Warp einer Scheibe bezeichnet die Summe der Beträge der größten Abstände, die eine Referenzebene zu einer Medianfläche der entspannt gehaltenen Scheibe nach oben und nach unten hat, wobei die Referenzebene eine Best-Fit-Ebene zur Medianfläche ist. Die Messung des Warps ist im Standard SEMI MF1390 beschrieben. Die Warp-Kurve (linear shape scan) entspricht dem eindimensionalen Profil, das man erhält, wenn die Differenz der Mediankurve der Medianfläche und der Referenzgerade der Referenzebene entlang des Durchmessers betrachtet wird, vorzugsweise in Schnittrichtung oder bis zu wenige Grad abweichend davon, falls der Einfluss einer Orientierungskerbe (notch) gemieden werden soll. Der Einfluss von Gravitation auf die Warp-Kurve kann durch vertikales Anordnen der Scheibe beim Messen des Warps oder durch eine Korrektur beim Berechnen der Differenz berücksichtigt werden. Die Warp-Kurven können gefiltert oder einer anderen mathematischen Operation unterworfen werden, vorausgesetzt, die dadurch bewirkten Veränderungen heben sich bei der erfindungsgemäßen Differenzbildung von Warp-Kurven auf.

Die Erfindung wird nachfolgend unter Bezugnahme auf Zeichnungen beschrieben.

### Kurzbeschreibung der Figuren

**Fig.1** zeigt schematisch den Schnittverlauf durch ein Werkstück von Sägedrähten des Drahtgatters, der sich typischerweise wegen der vorübergehenden Wärmeausdehnung des Werkstücks trotz Anwenden eines Verfahrens zur Korrektur des mittleren Warps ergibt.
**Fig.2** (oben) zeigt in einer Zusammenschau typische Warp-Kurven von Scheiben vom Werkstück-Anfang und vom Werkstück-Ende.

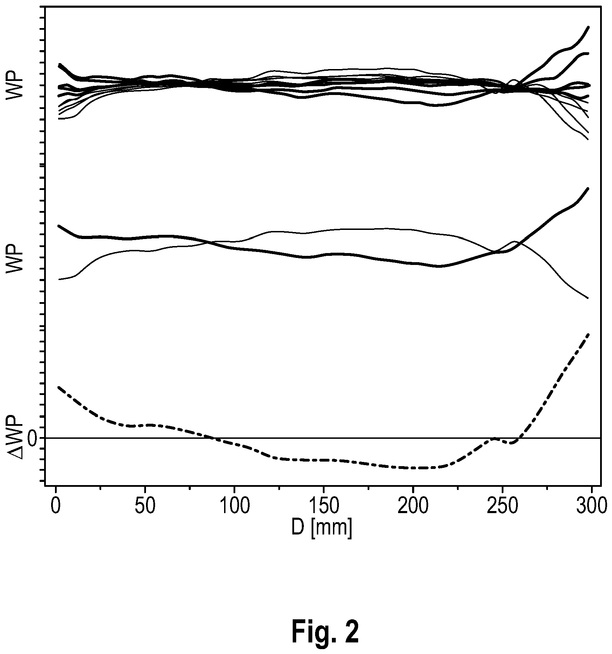

**Fig.2** (Mitte) zeigt gemittelte Warp-Kurven von Scheiben vom Werkstück-Anfang und vom Werkstück-Ende.
**Fig.2** (unten) zeigt die Differenz der gemittelten Warp-Kurven vom Werkstück-Anfang und vom Werkstück-Ende.

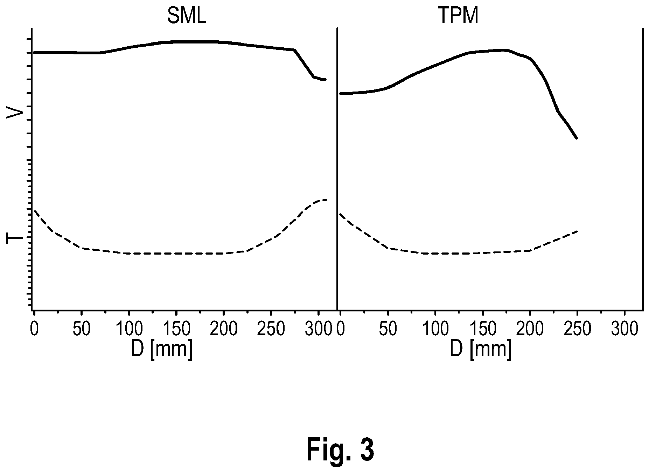

**Fig.3** (linke Hälfte) zeigt Verläufe der Volumen-Geschwindigkeit (oben) und der Temperatur (unten) des Schneidmittels in Abhängigkeit der Schnitttiefe.
**Fig.3** (rechte Hälfte) zeigt Verläufe der Volumen-Geschwindigkeit (oben) und der Temperatur (unten) des Temperier-Mediums in Abhängigkeit der Schnitttiefe.

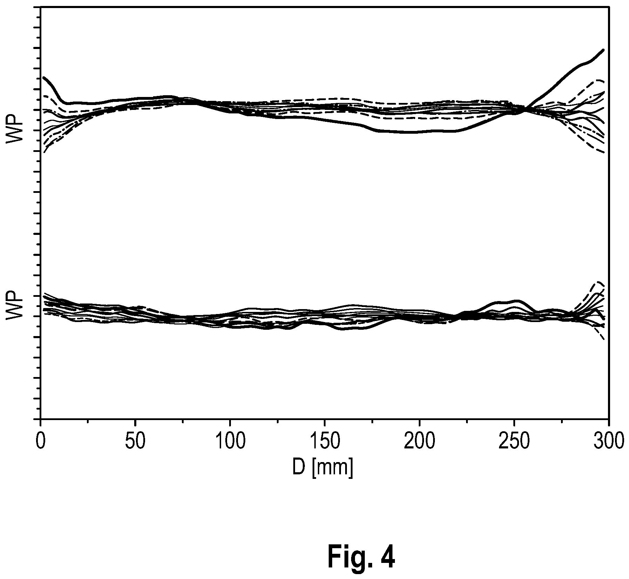

**Fig.4** (oben) zeigt die Variation übereinandergelegter Warp-Kurven von Scheiben vom Werkstück-Anfang und vom Werkstück-Ende, die ohne Nutzung der Erfindung von einem Werkstück abgetrennt wurden.
**Fig.4** (unten) zeigt die Variation übereinandergelegter Warp-Kurven von Scheiben vom Werkstück-Anfang und vom Werkstück-Ende, die von einem Werkstück abgetrennt wurden, das auf erfindungsgemäße Weise in Scheiben zerteilt wurde.

### Liste der verwendeten Bezugszeichen

- **1**: Drahtabschnitte
- **2**: Werkstück
- **3**: Werkstück-Anfang
- **4**: Werkstück-Ende
- D: Schnitttiefe
- WP: Warp-Kurven
- ΔWP: Warp-Kurven-Differenz
- V: Volumen-Geschwindigkeit
- T: Temperatur
- SML: Schneidmittel
- TPM: Temperier-Medium

### Detaillierte Beschreibung erfindungsgemäßer Ausführungsbeispiele

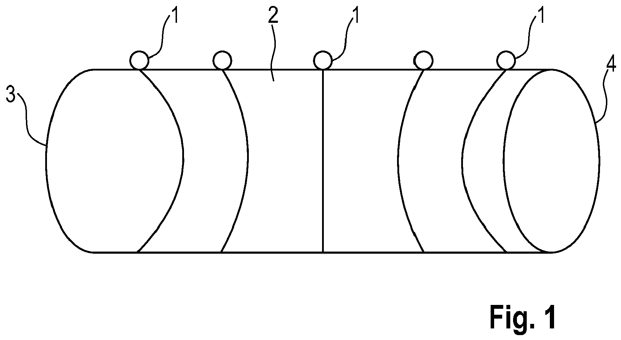

Fig.1 zeigt schematisch den Schnittverlauf von Drahtabschnitten 1 des Drahtgatters, der sich typischerweise wegen der vorübergehenden Wärmeausdehnung des Werkstücks 2 ergibt. Werden die erhaltenen Scheiben um 90° im Uhrzeigersinn gedreht, weisen Scheiben vom Werkstück-Anfang 3 eine konkave Form und Scheiben vom Werkstück-Ende 4 eine konvexe Scheibenform auf.

Fig.2 (oben) zeigt typische Warp-Kurven WP von Scheiben vom Werkstück-Anfang und vom Werkstück-Ende. Sie wurden mit einem kapazitiv arbeitenden Messgerät vom Typ MX 7012 des Herstellers E+H Metrology GmbH, Deutschland, ermittelt. Die Variation der Warp-Kurven ist besonders ausgeprägt am Anfang, in der Mitte und am Ende des Abtrennvorgangs. Fig.2 (Mitte) zeigt zwei durch Mittelung erhaltene Warp-Kurven, die Scheiben vom Werkstück-Anfang und vom Werkstück-Ende repräsentieren und Fig.2 (unten) die Differenz ΔWP dieser Warp-Kurven.

Die Temperatur des Schneidmittels beziehungsweise die Temperatur des Temperier-Mediums und/oder die Volumen-Geschwindigkeit, mit der das Schneidmittel dem Drahtgatter beziehungsweise das Temperier-Medium dem Werkstück während eines Abtrennvorgangs zugeführt werden, richten sich nach einer solchen Differenz von Warp-Kurven, sind also von Daten abhängig, die nach mindestens einem vorausgegangenen Abtrennvorgang ermittelt werden.

Bei einer Differenz von null wird die für den Prozess jeweils vorgesehene Temperatur beziehungsweise Volumen-Geschwindigkeit eingestellt, bei einer positiven Differenz eine entsprechend höhere Temperatur beziehungsweise niedrigere Volumen-Geschwindigkeit und bei einer negativen Differenz eine entsprechend niedrigere Temperatur beziehungsweise höhere Geschwindigkeit.

Fig. 3 zeigt an einem Beispiel Verläufe der Volumen-Geschwindigkeit V (oben) und der Temperatur T (unten) des Schneidmittels SML (linke Hälfte) und des Temperier-Mediums TPM (rechte Hälfte) in Abhängigkeit der Schnitttiefe D. Geschnitten wurden Halbleiterscheiben aus Silizium von einem Einkristall. Die Verläufe orientieren sich an der Differenz der Warp-Kurven, die in Fig.2 (unten) dargestellt ist. Am Anfang und am Ende des Schnittverlaufs ist die Differenz größer null und bei einer mittleren Schnitttiefe kleiner null. In Einklang damit sind die Verläufe von Temperatur und Volumen-Geschwindigkeit gemäß Fig.3. So ist während einer mittleren Schnitttiefe die Volumen-Geschwindigkeit des Schneidmittels vergleichsweise hoch und die Temperatur des Schneidmittels vergleichsweise niedrig eingestellt. Entsprechendes gilt für die Volumen-Geschwindigkeit und die Temperatur des Temperier-Mediums. Die Temperier-Leistung des Schneidmittels und des Temperier-Mediums haben während der Schnittverlaufs unterschiedliches Gewicht. Gegen Ende des Schnittverlaufs liegt die Temperier-Leistung vollständig auf der Seite des Schneidmittels, weil dann kein Temperier-Medium mehr zum Werkstück zugeführt wird.

Fig.4 zeigt an gleichzeitig dargestellten Warp-Kurven vom Werkstück-Anfang und vom Werkstück-Ende den Unterschied zwischen dem erfindungsgemäßen Verfahren (unten) und einem Verfahren (oben), das darauf verzichtet, Temperatur und/oder Volumen-Geschwindigkeit von Schneidmittel und Temperier-Medium in Abhängigkeit der Differenz von Warp-Kurven einzustellen. Die Variation der Warp-Kurven ist im Fall der Anwendung des erfindungsgemäßen Verfahrens insbesondere zu Beginn, in der Mitte und am Ende des Schnittverlaufs deutlich weniger ausgeprägt.

## Patentansprüche

1. Verfahren zum Abtrennen einer Vielzahl von Scheiben von einem Werkstück mittels einer Drahtsäge während eines Abtrennvorgangs, wobei die Drahtsäge ein Drahtgatter aus sich bewegenden Drahtabschnitten eines Sägedrahts und eine Stellvorrichtung umfasst, und das Drahtgatter in einer Ebene zwischen zwei Drahtführungsrollen gespannt ist, wobei jede der zwei Drahtführungsrollen zwischen einem Festlager und einem Loslager gelagert ist, das Verfahren umfasst das Zustellen des Werkstücks mittels der Stellvorrichtung durch das Drahtgatter entlang einer Zustellrichtung senkrecht zu einer Werkstückachse und senkrecht zur Ebene des Drahtgatters;
das Zuführen eines Schneidmittels zum Drahtgatter;
das Zuführen eines Temperier-Mediums zum Werkstück;
das Leiten einer Temperier-Flüssigkeit entsprechend eines Temperaturprofils durch die Festlager und/oder das Verschieben des Werkstücks entlang der Werkstückachse entsprechend eines Verschiebeprofils, wobei das Temperaturprofil und das Verschiebeprofil einer Formabweichung entgegengerichtet sind;
**gekennzeichnet durch**
das Ermitteln von Warp-Kurven von mindestens einer Scheibe vom Werkstück-Anfang und von mindestens einer Scheibe vom Werkstück-Ende von mindestens einem vorausgegangenen Abtrennvorgang unter Verwendung der Drahtsäge;
das Bilden der Differenz der Warp-Kurven;
das Einstellen der Temperatur und/oder der Volumen-Geschwindigkeit des Schneidmittels während des Abtrennvorgangs in Abhängigkeit der Differenz der Warp-Kurven; und
das Einstellen der Temperatur und/oder der Volumen-Geschwindigkeit des Temperier-Mediums in Abhängigkeit der Differenz der Warp-Kurven.

2. Verfahren nach Anspruch 1, **gekennzeichnet durch** das Übergewichten einer Temperier-Leistung des Temperier-Mediums am Anfang des Abtrennvorgangs und einer Temperier-Leistung des Schneidmittels am Ende des Abtrennvorgangs.

3. Verfahren nach Anspruch 1, **gekennzeichnet durch** das Abstreifen des Temperier-Mediums vom Werkstück.

4. Verfahren nach einem der Ansprüche 1 bis 3, **dadurch gekennzeichnet, dass** eine gemittelte Warp-Kurve von Scheiben, die während des mindestens einen vorausgegangenen Abtrennvorgangs abgetrennt wurden, die Formabweichung anzeigt.

5. Verfahren nach einem der Ansprüche 1 bis 4, **dadurch gekennzeichnet, dass** nach Erreichen einer Schnitttiefe von nicht weniger als 85 % die Zufuhr des Temperier-Mediums zum Werkstück eingestellt wird.

6. Verfahren nach einem der Ansprüche 1 bis 5, **dadurch gekennzeichnet, dass** die Differenz der Warp-Kurven auf Warp-Kurven beruht, die von Scheiben vom Werkstück-Anfang und vom Werkstück-Ende mehrerer vorausgegangener Abtrennvorgänge stammen, wobei Warp-Kurven von Scheiben vom Werkstück-Anfang beziehungsweise von Scheiben vom Werkstück-Ende vor der Differenzbildung jeweils zu einer Warp-Kurve gemittelt werden.
